# EUROPEAN PATENT APPLICATION

(11) **EP 1 801 957 A1**
(43) Date of publication of application: **27.06.2007**
(21) Application number: 05112519.3
(22) Date of filing: 20.12.2005
(51) Int. Cl.: H02M 1/00, H02M 7/155, H02M 7/162

(54) **Rectifier for a frequency converter**

(71) Applicant: Emotron AB, 250 24 Helsingborg (SE)
(72) Inventor: Rose, Carsten, SE-253 73, Gantofta (SE); van der Palen, Machutus Josephus, BE-3920, Lommel (BE); Andersson, Christer, SE-252 77, Helsingborg (SE); Persson, Rickard, SE-226 47, Lund (SE)
(74) Representative: Grönlund, Tim Linus Wilhelm

(57) **Abstract**

A rectifier circuit for a frequency converter and means and methods for minimizing the risk of such circuit being exposed to stressing or harmful levels of current.

The rectifier circuit comprises an AC input, a DC output including a V_{dc+} node and a V_{dc-} node,
a thyristor arranged between said at least one AC input and the V_{dc+} node, an inductor arranged between a cathode of the thyristor and the V_{dc+} node, a memory arranged for storing firing values, at least one set of sequential firing values being stored in the memory, the firing values indicating a firing angle for the thyristor, a control means arranged to sequentially read said firing values from the memory, to generate a thyristor firing signal based on said firing value and to send said signal to a thyristor.

## Description

### Technical Field of the Invention

The present invention relates to a rectifier circuit and to means and methods for minimizing the risk of such circuit being exposed to stressing or harmful levels of current.

### Background of the Invention

In general, conventional rectifier circuits are not well equipped to minimize the risk of the circuit, the components of the circuit and/or peripheral components being exposed to stressing or harmful levels of current. Peripheral components may for instance be fuses or other overload protectors.

Traditionally, protection from high currents during normal operation is achieved by means of fuses and protection from in-rush currents during startup is achieved by arranging a resistor in series with a smoothing capacitor of the rectifier and arranging a relay in parallel with the resistor. The resistor is utilized to limit the in-rush current during startup and is bypassed by means of the relay when normal operation conditions are reached. However, these solutions are known to fail now and then and when such failure occur, on site maintenance is required in order to change fuses and to maintain or change relays. Further, the use of relays and resistors involves unnecessary high costs and it also requires a significant amount of space, usually more than the rectifier circuit itself.

Therefore, there exists a need for an improved rectifier circuit. In the patent US 6 038 155 a three phase SCR rectifier bridge with soft start control IC is described and is addressing similar problems. This soft start control IC controls the start-up current by decreasing the firing angle of SCRs (Semiconductor Controlled Rectifiers) by means of generating a timing wave reference signal and a timing wave signal, wherein the timing wave reference signal is a ramping signal generated from a peak value and another ramping signal and wherein the timing wave signal is a pseudo saw tooth wave derived from the difference of voltage of two different pairs of the inputted AC voltage lines. Accordingly, the design of the soft start control is complex and inflexible.

### Summary of the Invention

The object of the present invention is to provide an improved rectifier circuit in relation to the traditional rectifier circuits described above. A further object is to avoid exposure of a rectifier circuit and/or peripheral devices of the rectifier circuit to stressing or harmful currents.

This object is achieved by means of a method for soft starting a rectifier circuit according to claim 1, a rectifier circuit for a frequency converter according to claim 8, a rectifier circuit for a frequency converter according to claim 14, and a method according to claim 18.

In particular, according to one aspect of the invention there is provided a method for soft starting a rectifier circuit comprising at least one thyristor and a memory. The method comprising:
retrieving a firing value from the memory, and
sending a firing signal to the at least one thyristor at a firing point in time corresponding to a firing angle indicated by said firing value.

According to another aspect of the invention there is provided a rectifier circuit for a frequency converter. The rectifier circuit comprises:
at least one AC input,
a DC output including a V_{dc+} node and a V_{dc-} node,
a thyristor arranged between said at least one AC input and the V_{dc+} node,
an inductor arranged between a cathode of the thyristor and the V_{dc+} node,
a memory arranged for storing firing values,
at least one set of sequential firing values being stored in the memory, the firing values indicating a firing angle for the thyristor,
a control means arranged to sequentially read said firing values from the memory, to generate a thyristor firing signal based on said firing value and to send said signal to a thyristor.

Those two aspects of the invention both have the advantage of requiring relatively little maintenance, being cost effective, being energy effective, and occupying a relatively small space. This is mainly achieved as a result from the possibility to ramping up the voltage by means of thyristors. Further, the use of firing values and the storing of those in a memory are advantageous in that rectifier is easily adapted or optimized for a specific application.

According to one embodiment the rectifier includes a plurality of thyristors and one set of sequential firing values is stored for each thyristor in memory. The advantage of this embodiment is that each thyristor may be controlled by an individually adapted sequence of firing values and the ramping up may thus be optimized based on the individual thyristors and the characteristics of the system at the time for making a thyristor conduct current.

According to yet another aspect of the invention there is provided a rectifier circuit for a frequency converter. The rectifier circuit comprises:
at least one AC input,
a DC output including a V_{dc+} node and a V_{dc-} node,
a thyristor arranged between said at least one AC input and the V_{dc+} node,
an inductor arranged between the thyristor and the V_{dc+} node, the inductor being connected to the thyristor via a node Vp, and
a control means connected to the Vp node and to the V_{dc+} node, the control means includes:
   an electrical potential difference detector arranged to detect at least one predefined value of difference in electrical potential between the Vₚ node and the V_{dc+} node and
a timer means arranged to respond to a signal from said electrical potential difference detector and to generate an alarm signal if the timer expires.

According to a further aspect of the invention there is provided a method for detecting unwanted current levels in a rectifier circuit. The method comprises:
monitoring an electrical potential over an inductor of the rectifier circuit,
starting a timer when said monitored electrical potential passes a first predetermined level,
resetting said timer in response to said monitored electrical potential passing a second predetermined level, and
generating an alarm signal if the timer expires before the monitored electrical potential passes the second predetermined level.

An advantage of these two aspects is that they make the rectifiers easy to maintain, cost effective, and occupy a relatively small space. One reason for this is the fact that the monitoring in this aspect is achieved over the inductor, which is a component already present in the circuit for other reasons.

According to an embodiment concerning all aspects of the intention, a common reference input of the control means is connected to a cathode of a thyristor. The advantage of this embodiment is that no galvanic isolation is needed between the power circuit, i.e. the rectifier circuit and the control means. Accordingly, this arrangement may save costs. Yet another advantage is that the control means is situated on the power terminal related electrical potential.

A further scope of applicability of the present invention will become apparent from the detailed description given below. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

Other features and advantages of the present invention will become apparent from the following detailed description of a presently preferred embodiment, with reference to the accompanying drawings, in which
Fig 1 is a schematic view of a rectifier circuit according to one embodiment of the present invention,
Fig 2 is a schematic block diagram of a detector means arranged in a control means of the rectifier circuit to enable the circuit to avoid possible harmful current levels,
Fig 3 is a schematic diagram of the electrical potential between a first phase V_{L1} and the negative pole of the DC output and the electrical potential between a positive pole of the DC output, V_{DC+}, and the negative pole of the DC output, V_{DC-}, during a specific time period when charging of a capacitor is in progress,
Fig 4 is a flowchart showing a method for start a rectifier circuit according to one embodiment of the invention,
Fig 5 is a schematic diagram showing possible firing angles positioned on a graph showing the potential between a first phase V_{L1} and the negative pole of the DC output,
Fig 6a is schematic diagrams of voltage at the DC-output, the input voltage, the current running through the inductor and the voltage over the inductor and the DC-output during a time interval in which a thyristor is conducting.
Fig 6b is a schematic diagram of a signal on line 32 of Fig 2 according to one embodiment of the present invention, and
Fig 7 is a flowchart showing a method for enabling the circuit to avoid possible harmful current levels.

### Detailed Description of Embodiments

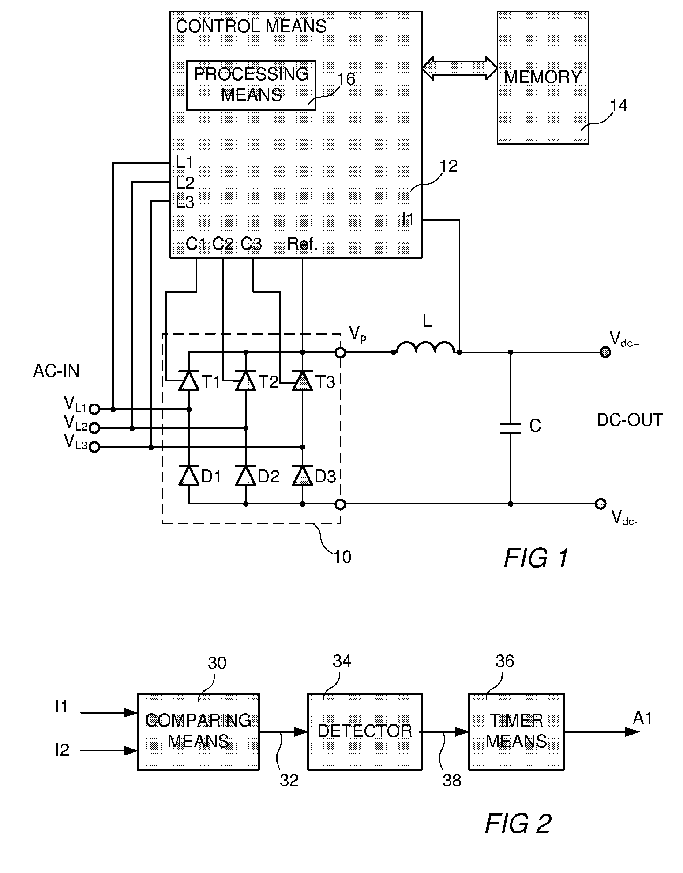

Fig 1 is a schematic diagram of one embodiment of the invention. The rectifier circuit comprises a half controlled bridge 10 (HCB), a three phase AC-input V_{L1}, V_{L2}, V_{L3}, an inductor L, a smoothing capacitor C and a DC-output. The DC-output is arranged over the capacitor C and the output is also referred to as the difference in electric potential between two nodes V_{dc+} and V_{dc-}. A control means 12 is connected to the rectifier circuit for monitoring and controlling the rectifier circuit.

The HCB 10 includes thyristors T1-T3 and diodes D1-D3. The thyristors may be any type of switchable power devices. The anode of each thyristor T1-T3 is connected to one phase V_{L1}, V_{L2}, V_{L3}, of the AC-input and the cathode of each diode D1-D3 is also connected to one phase V_{L1}, V_{L2}, V_{L3}, of the AC-input. The cathode of each thyristor T1-T3 is connected to a common line referred to as the node Vₚ. The gate of each thyristor is also connected to a control output C1-C3 of the control means for sending pulses triggering the thyristor to start conducting current, i.e. firing the thyristor. The anode of each diode D1-D3 is connected to the negative side of the capacitor and thus the common line referred to as node V_{dc-}.

The inductor L is arranged between the node Vₚ, i.e. the cathodes of the thyristors, and the positive side of the capacitor, i.e. the node V_{DC+} of the DC-output. The effect of the inductor L being arranged like this is that it smoothes the DC-output voltage, i.e. decrease the DC-output voltage ripple. Further effects of the inductor being arranged like this is that it may reduce the current harmonics generated by the rectifier circuit.

The control means is connected to a memory 14 external to the control means, however, the memory 14 may be included in the control means. The memory 14 is arranged to store at least firing values for use in triggering the thyristors T1-T3 of the HCB 10.

Further, the control means is connected to the AC-inputs V_{L1}, V_{L2}, V_{L3}, at control input L1-L3 in order to frequently provide information of the present status of the AC-input signals to the control means. A control input I1 of the control means is connected to the V_{dc+} node.

According to one embodiment the input signals of the control means is related to at least one reference potential. Such a reference potential may be provided to the control means via the input referred to as Ref. According to this embodiment the Ref. input is connected to the Vp node. Using this potential/node as reference may be advantageous in that it is at the same electrical potential as the driver circuits triggering the thyristors. Being the same electrical potential makes the implementation of the control means simpler and less expensive.

Additionally, the use of the Vp node as reference may result in that no galvanic isolation is needed between the power circuit, i.e. the rectifier circuit including the HCB, and the control means. Accordingly, this arrangement may save costs. Yet another advantage is that the control means is situated on the power terminal related electrical potential.

Additionally, the control means includes a processing means 16, for processing data and inputs in accordance with a predetermined method. The method may be implemented by means of a computer program running in the processing means 16. The code of such a program may be stored in the memory 14.

The control input I1 of the control means 12 may be used to determine whether something is wrong with the circuit or if there may be short-circuit of the DC-output. One embodiment of the design of the control means in connection with the control input I1 is shown in Fig 2. The I1 input signal is connected to a comparing means 30. Another signal, comparison signal I2, is also connected to the comparing means 30. The comparing means 30 is arranged to generate a signal 32 indicating the difference between the control input I1 and the comparison signal I2. The comparison signal I2 may be the Ref. signal connected to the Vₚ node of the rectifier circuit. The output 32 from the comparing means 30 is passed to a detector 34 detecting when the signal on line 32 passes a specific value and upon such detection generate a timer signal on line 38. The specific value may for instance be zero, i.e. the zero crossing of the signal on line 32. The detector 34 is connected to a timer means 36 via signal line 38. The timer means 34 is arranged to start in response to the timer signal 38 and to stop or reset in response to the next timer signal sent by the detector 34 on the signal line 38. The timer means 36 may be arranged to present an alarm signal A1 if a signal from the detector 34 relating to a subsequent timer signal is not received within a predetermined time period. By using this arrangement it is possible to detect defects or errors resulting in a stressing or harmful current.

As mentioned above, the rectifier circuit is designed to minimize the risk of the circuit, the components of the circuit and peripheral components being exposed to stressing or harmful levels of current.

One way of achieving this may be to utilize the above embodiment to prevent high in-rush currents, which may result from the charging of a non-charged capacitor C, in the rectifier circuit upon startup of the rectifier. In order to prevent the high in-rush currents the control means 12 is arranged to stepwise ramp up the voltage from the HCB 10 to the capacitor and the DC-output. The ramping up is achieved by controlling the firing angle of each of the thyristors T1-T3 according to a specific scheme. One possible scheme will be described below.

A thyristor of the HCB may be controlled by monitoring the voltage over the thyristors, e.g. the difference in voltage between V_{L1} and Vₚ in Fig 1, and firing pulses related in time to the monitored voltage over the thyristors, e.g. thyristor T1, may be generated. The difference in time/angle between a characteristic event of the voltage over the thyristors and a firing pulse to corresponding thyristors is provided and is normally called firing angle. According to one embodiment of the present invention the firing angles is based on firing values frequently being retrieved from the memory 14 during the startup sequence in order to step by step charge the capacitor C without exposing the circuit to high inrush currents.

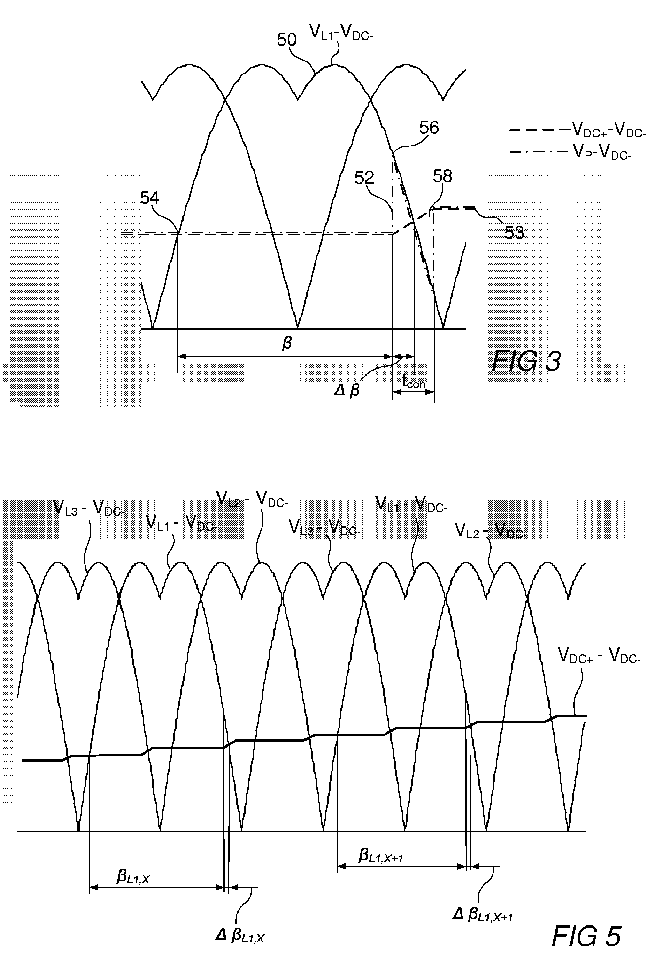

In Fig 3 one graph 50 is showing the voltage V_{L1}-V_{DC-}, one graph 52 is showing the voltage Vₚ-V_{DC-}, and another graph 53 is showing the voltage V_{DC+}-V_{DC-} during a specific time interval during a startup sequence for one of the thyristors, the voltages over the other thyristors in the HCB is similar to the voltages V_{L1}-V_{DC-} presented in Fig 3, during a corresponding time interval. Further, the other thyristors are generally controlled in a way corresponding to the way the one of the thyristors is controlled during the startup. The change of voltage over a thyristor T1-T3, e.g. V_{L1}-Vₚ, from negative to positive, i.e. the point 54 where graph 53 is crossing graph 50, is detected by the control means 12 via input L1 as a zero crossing, because Vₚ is the reference potential of the control means. In response to said detection of such crossing the control means generate a firing pulse to the thyristor at a time or at an angle β after the detection of the crossing, said time or angle β is related to the firing value retrieved from the memory 14. According to one embodiment the firing value FV correspond directly to the firing angle, i.e. new firing angle β =FV·k, wherein k may be any coefficient between -∞ and +∞. According to another embodiment the firing value retrieved from the memory is a value corresponding to a change of the former firing angle, i.e. new firing angle β = previous firing angle β - FV·k, wherein k may be any coefficient between -∞ and +∞. In other words, from the time or angle where the voltage over the thyristor, i.e. V_{L1}-Vₚ, changes from negative to positive, i.e. the zero crossing 54, the firing angle β is added to the angle of the zero crossing and when the time corresponding to the firing angle is present 56, or the angle corresponding to the firing angle is present 56, then a firing pulse is generated in the control means and sent to the thyristor.

In response to the firing pulse the thyristor start to conduct in its forward direction and a current charging the capacitor C is passed through the thyristor until the current stops flowing or is forced to flow in the opposite direction through the thyristor, then the thyristor stops conducting. This period is depicted in Fig 3 and referred to as t_{con}. During the time the thyristor conducts current the capacitor is charged and, thus, the voltage V_{DC+}-V_{DC-} is increased, as shown at 58. Each of the thyristors T1-T3 is controlled in this way during the startup sequence in accordance with a control scheme.

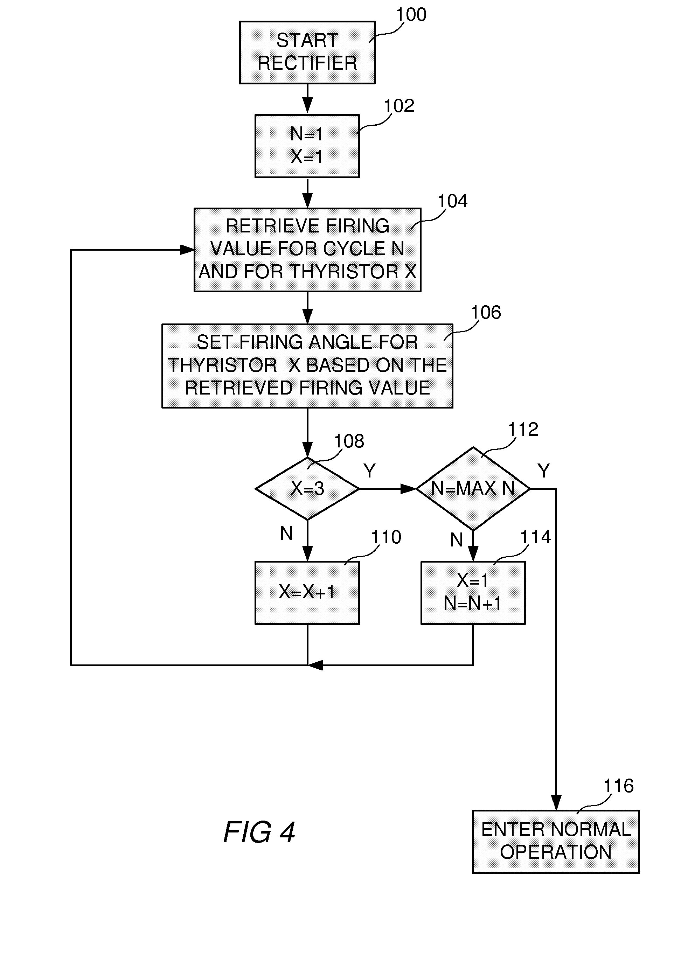

According to one embodiment of the invention a control scheme of a startup sequence for the rectifier may be as shown in Fig 4. The rectifier is started, step 100, and a present firing cycle is set to the first firing cycle, N=1, and the present thyristor to control is set to the first one T1, X=1, step 102. Then, in step 104, the firing value relevant for firing cycle N and for the present thyristor X is retrieved from the memory 14. Then the firing angle or the time from the zero crossing is set to the value indicated by the firing value retrieved for the present thyristor X, step 106.

Then if the present thyristor that now has been fired, i.e. set to conduct, is not the last one, i.e. X<>3 (step 108), the system is set to perform steps 104-106 for the next thyristor, step 110. For example, if N=1 and X=1 then X is incremented to X=2 and steps 104-106 are performed on the firing value of the first firing cycle for the second thyristor.

However, if the present thyristor, which is the last one that has been fired, is the last one of the thyristors, i.e. X=3 (step 108), the system is set to check, step 112, if the present firing cycle is the last available, i.e. N=MAX N.

If the present firing cycle is not the last one then the indicator of the present thyristor is reset to the first thyristor, i.e. X=1, and the present firing value is set to be the next firing cycle for the first thyristor, i.e. N=N+1, step 114, and steps 104-106 is performed for the next firing cycle and each thyristor is operated once more. For example, if N=1 and X=3 then X is set to X=1 and N is incremented to N=2 and steps 104-106 are performed for the second firing cycle and on the first thyristor.

If the present firing value is the last one, i.e. N=MAX N, then the control means 12 makes the rectifier operate in normal operation. Normal operation may for instances involve that the control means operates the rectifier in such a way that the thyristors behave as if they where diodes, i.e. emulating a traditional diode bridge.

The firing values are stored in a memory and may be stored in a great number of different ways, which are evident for the person skilled in the art, as long as it is possible to determine which one of the thyristors a value belong to and the position of the value in the array or sequence of firing values for a particular thyristor. For instance the firing values may be stored in one array holding all the values for all the thyristors, in one array for each thyristor, in a matrix, etc.

By storing firing values in a memory for retrieval when called for may facilitate the flexibility of the system and the firing values of the HCB may easily be changed to be adapted to a specific application.

In another embodiment the thyristors share the same firing value during one firing sequence, i.e. each of the thyristors are fired using the same firing value, and the firing value is changed when the next firing sequence is started.

The number of firing values stored for each thyristor depends on the application.

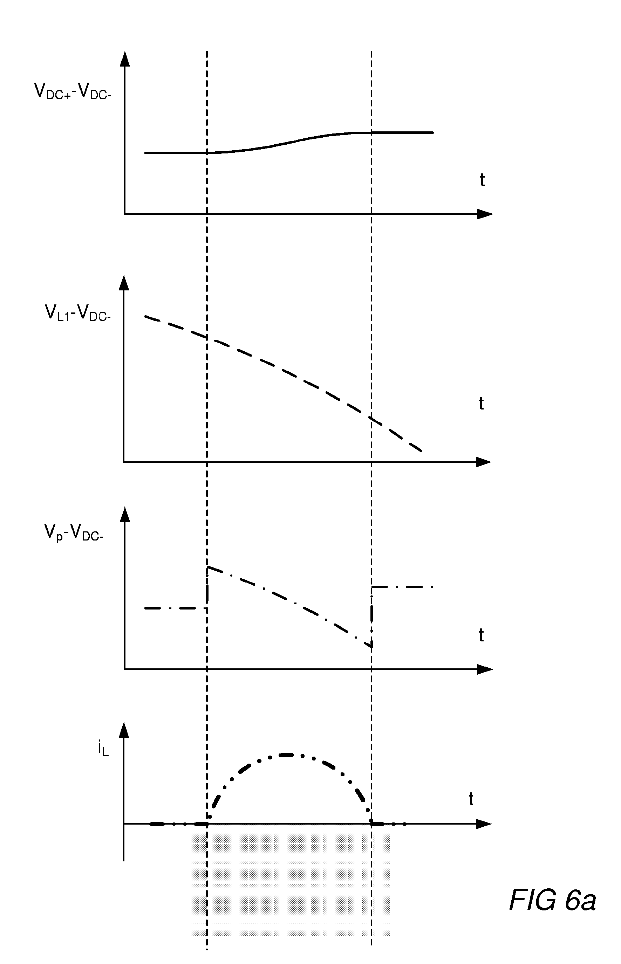

One possible sequence of firing values is depicted in fig 5, where they are plotted on a graph showing the voltage between V_{L1}-V_{DC-}, V_{L2}-V_{DC-}, and V_{L3}-V_{DC-}. The firing angle during the depicted time period for the thyristor connected to phase L1 is depicted and referred to as β_{L1}. Fig 5 depicts firing angles number x and x+1 , based on firing values number x and x+1 in the sequence of firing values for this thyristor. The firing angles of the other thyristors are not indicated by any reference in the figure in order not to obscure the figure. However, the firing angles of the other thyristors may be derived from the figure by identifying the crossing of the graph of the Voltage relating to the specific thyristor and the start of the increase in the voltage V_{DC+}-V_{DC-} relating to the same thyristor. As shown in figure 5 the scheme results in a ramping up of the voltage V_{DC}+-V_{DC-}.

In Fig 6a a number of diagrams illustrating voltages and of currents of the circuit in Fig 1 during the charging of the capacitor is shown. A time interval is indicated in the figure, the interval between the dashed lines extending through all diagrams. The time interval is a time interval in which a thyristor is conducting current. The voltage V_{DC+}-V_{DC-} over the capacitor is increasing during the time interval, as the capacitor is charged. As showed in Figs 3 and 5 the voltage of the supply line, in this example V_{L1}-V_{DC-}, connected to the thyristor is continuously decreasing during this time interval. The difference in electrical potential between node Vp and node V_{DC-}, i.e. Vₚ-V_{DC-}, is equal to the voltage of V_{DC+}-V_{DC-} prior to the thyristor begin conducting. When the thyristor starts conducting difference in electrical potential Vₚ-V_{DC}- becomes equal to V_{L1}-V_{DC-} and follows this potential until the thyristor stops conducting. When the thyristor stops conducting the difference in electrical potential Vₚ-V_{DC-} once again becomes equal to the voltage V_{DC+}-V_{DC-} over the capacitor. The difference in voltage between V_{L1}-V_{DC-} and V_{DC+}-V_{DC-} equals the voltage drop over the inductor. The characteristics of an inductor makes the current i_{L} through the inductor and over the time interval initially increase and then decrease to zero again when V_{L1}-V_{DC-} has reached a lower voltage level than V_{DC}+-V_{DC-}.

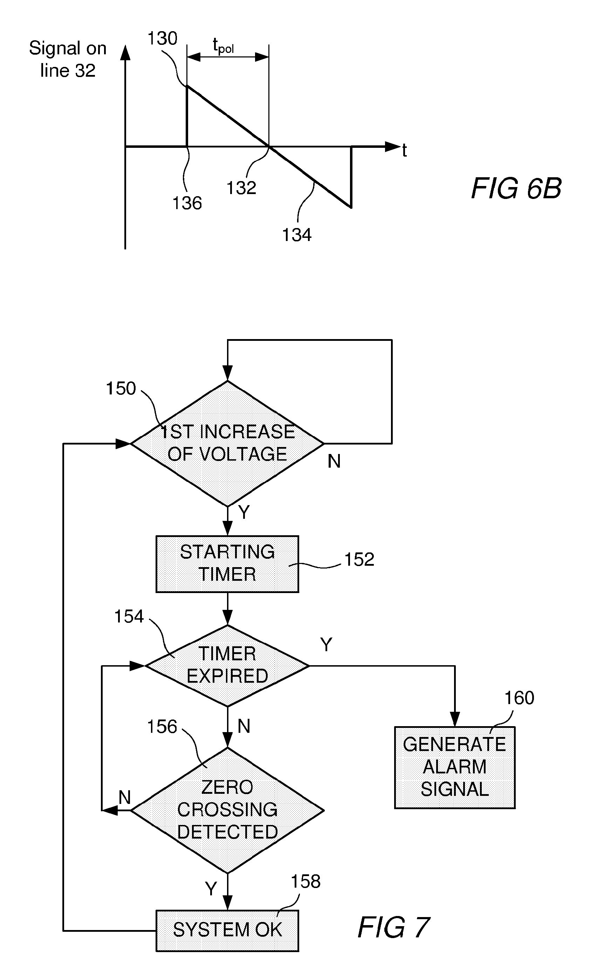

In one embodiment, see Fig 2, of the design of the control means relating to the control input I1 and in which the input signal I2 corresponds to the Ref. signal, see Fig 1, the signal on line 32 essentially represents the voltage over the inductor L and may look like the graph in Fig 6b, because the signal being essentially proportional to the voltage over the inductor L, which is discussed above. However, the positive portion of the signal in Fig 6b may be negative and the negative portion of the signal may be positive if the points for measuring is changed or if the signal is inverted. The signal on line 32 as depicted in Fig 6b may be seen as the inverted result from measuring the difference in electrical potential as depicted in Fig 1.

In the presently described embodiment the effect the current through an inductor L has on the voltage over the inductor L, i.e. that the voltage is proportional to the derivate of the current, is utilized in order to decide whether an unreasonable current is drawn. Such decision is made based on the time tₚₒₗ it takes for the voltage over the inductor to decrease to a predefined value 132, e.g. zero, from a greater positive value measured in connection with a first voltage change from zero to the greater positive value, 130.

One way to achieve this is described by the flow chart of Fig 7 and includes checking the voltage over the inductor L for a first substantial increase in voltage, step 150. The first substantial increase in voltage over the inductor L may be defined as the signal on signal line 32 going from positive to negative or from zero to a substantially positive value, substantially meaning that noise on the signal are not allowed to indicate a substantial increase in voltage. If the opposite polarity is chosen for the signal 32 indicating the voltage over the inductor, the zero crossing is defined according to this polarity.

If no substantial increase in voltage is detected the process waits until one is detected. When a first substantial increase in voltage is detected a timer is set to count down from a predetermined value, step 152. The timer should be set to a value that makes it reasonable to assume that an error has occurred or that the circuit is erroneous if the timer is allowed to expire. The value of the timer may differ in systems arranged to handle different effects, i.e. there may be different timer value in a system handling 1kW than in a system handling 100kW.

If the timer has not expired, step 154, then the process check for a zero crossing, step 156. The second zero crossing may be defined as the signal on signal line 32 going from positive to negative or from positive to zero, if the opposite polarity is chosen for the signal indicating the voltage over the inductor the zero crossing is defined according to this polarity.

If the timer has not expired and the zero crossing has not been detected the process waits for one of those events to occur.

If the zero crossing is detected before the timer expires, i.e. tₚₒₗ < timer value, then the system is considered sound, i.e. no errors or defects is found in the circuit or the system, in regard of this check, step 158, the timer is stopped and reset and the process returns to step 150. However, if the timer expires before a zero crossing is detected, then an alarm signal is triggered or generated, step 160, and processed by the processing means 16.

The response to the alarm signal from step 160 may be to stop the input of AC-power to the rectifier circuit by means of preventing new triggering pulses to the thyristors and/or sending an alarm to a monitoring equipment.

## Claims

1. Method for soft starting a rectifier circuit comprising at least one thyristor and a memory, said method comprising:
retrieving a firing value from the memory, and
sending a firing signal to the at least one thyristor at a firing point in time corresponding to a firing angle indicated by said firing value.

2. Method according to claim 1, further comprising:
determining a detection point in time by monitoring the voltage over the at least one thyristor and detecting a point in time where the voltage over the thyristor corresponds to a predetermined voltage level value and where the direction of change of the voltage over the thyristor corresponds to a predetermined direction and
relating the firing point in time to the detection point in time by means of the firing angle indicated by the firing value.

3. Method according to any one of claims 1-2, wherein the memory includes a set of firing values intended for the at least one thyristor and wherein the act of retrieving a firing value is repeated a predetermined number of times on said set of firing values and each of the different firing values in the set of firing values is retrieved in a predetermined sequential order.

4. Method according to claim 3, wherein the determining of a detection point in time, relating the firing point in time to the detection point in time and sending a firing signal is repeated in connection with each retrieval of a firing value.

5. Method according to claim 3, wherein firing values of the set of firing values intended for the at least one thyristor are indicating decreasing firing angles when studied in the predetermined sequential order.

6. Method according to any one of claims 1-5, wherein each firing value retrieved is indicating a change of the previous firing angle.

7. Method according to any one of claims 1-6, wherein the rectifier circuit comprises a plurality of thyristors and wherein the retrieving of a firing value and sending a firing signal are performed for all thyristors.

8. Rectifier circuit for a frequency converter, said rectifier circuit comprising:
at least one AC input,
a DC output including a V_{dc+} node and a V_{dc-} node,
a thyristor arranged between said at least one AC input and the V_{dc+} node,
an inductor arranged between a cathode of the thyristor and the V_{dc+} node,
a memory arranged for storing firing values,
at least one set of sequential firing values being stored in the memory, the firing values indicating a firing angle for the thyristor,
a control means arranged to sequentially read said firing values from the memory, to generate a thyristor firing signal based on said firing value and to send said signal to a thyristor.

9. Rectifier according to claim 8, wherein the AC input includes a plurality of AC lines and the rectifier comprises a plurality of thyristors, each arranged between a separate AC line and the V_{dc+} node.

10. Rectifier according to claim 9, wherein one set of sequential firing values for each of the plurality of thyristors are stored in the memory.

11. Rectifier according to any one of claims 8-10, wherein a common reference voltage input of the control means is connected to a cathode of a thyristor.

12. Rectifier according to any one of claims 8-11, wherein a capacitor is arranged between the V_{dc+} node and the V_{dc-} and an inductor is arranged between a cathode of a thyristor and the V_{dc+}.

13. Rectifier according to any one of claims 8-11, wherein the control means includes a processor.

14. Rectifier circuit for a frequency converter, said rectifier circuit comprising:
at least one AC input,
a DC output including a V_{dc+} node and a V_{dc-} node,
a thyristor arranged between said at least one AC input and the V_{dc+} node,
an inductor arranged between the thyristor and the V_{dc+} node, the inductor being connected to the thyristor via a node Vp, and
a control means connected to the Vp node and to the V_{dc+} node, the control means includes:
an electrical potential difference detector arranged to detect at least one predefined value of difference in electrical potential between the Vp node and the V_{dc+} node and
a timer means arranged to respond to a signal from said electrical potential difference detector and to generate an alarm signal if the timer expires.

15. Rectifier circuit according to claim 14, wherein the electrical potential difference detector further is arranged to detect a direction of change in the electrical difference when passing said predefined value of difference in electrical potential between the Vp node and the V_{dc+}, to send a first signal to the timer means if the predetermined value of difference in electrical potential is passed and the detected direction corresponds to a first direction, and to send a second signal to the timer means when a subsequent passing of the predetermined value of difference in electrical potential is detected, and wherein the timer is arranged to expire if the time between the first and second signal exceeds a predetermined time.

16. Rectifier circuit according to any one of claims 14-15, wherein the control means includes a processor.

17. Rectifier circuit according to any one of claims 14-16, wherein a common reference voltage input of the control means is connected to the Vp node.

18. Method for detecting unwanted current levels in a rectifier circuit, said method comprising:
monitoring an electrical potential over an inductor of the rectifier circuit,
starting a timer when said monitored electrical potential passes a first predetermined level,
resetting said timer in response to said monitored electrical potential passing a second predetermined level, and
generating an alarm signal if the timer expires before the monitored electrical potential passes the second predetermined level.

19. Method according to claim 18, wherein the starting of a timer further requires that a direction of change in the monitored electrical potential corresponds to a predetermined direction.

20. Method according to any one of claims 18-19, wherein the resetting is performed in response to the first time the monitored electrical potential passes the second predetermined level after the timer has been started.

21. Method according to any one of claims 18-19, wherein said first predetermined level and said second predetermined level is the same level.

22. Method according to claim 21, wherein the first predetermined level and the second predetermined level is common reference voltage level of the control means.
